# EUROPÄISCHE PATENTANMELDUNG

(11) **EP 1 505 328 A2**
(43) Veröffentlichungstag der Anmeldung: **09.02.2005**
(21) Anmeldenummer: 04016749.6
(22) Anmeldetag: 15.07.2004
(51) Int. Cl.: F16L 13/10, F16L 47/02, F16L 47/20

(54) **Kupplung zum Verbinden von Leitungen**

(30) Priorität: 08.08.2003 DE 10336494
(71) Anmelder: VERITAS AG, 63571 Gelnhausen (DE)
(72) Erfinder: Rösch, Thomas, 63589 Linsengericht (DE); Seyler, Andreas, 63584 Gründau (DE); Osthold, Jan, 35428 Langgöns (DE); Zülch, Wilfried, 63571 Gelnhausen (DE); Pöppel, Artur, 63571 Gelnhausen (DE)
(74) Vertreter: Grünecker, Kinkeldey, Stockmair & Schwanhäusser Anwaltssozietät

(57) **Zusammenfassung**

Um eine dichte und gleichzeitig feste Verbindung von Fluid führenden Leitungen, insbesondere von Schläuchen oder Rohren, zu bewirken, ist erfindungsgemäß eine Kupplung mit einem Anschlussstück vorgesehen, das zumindest bereichsweise mit einer Leitung zusammenwirkt, wobei das Anschlussstück wenigstens einen Kleberaum aufweist, der mit einem Klebemittel gefüllt ist. Bei dem Verfahren zum Verbinden von Leitungen wird eine erfindungsgemäße Kupplung verwendet, wobei das Anschlussstück der Kupplung z.B. auf eine Leitung aufgesetzt und eine Wärmebehandlung durchgeführt wird, bei der sowohl das Klebemittel aushärtet als auch die Leitung thermisch umgeformt wird.

## Beschreibung

Die Erfindung bezieht sich auf eine Kupplung zum Verbinden von Leitungen, insbesondere von Schläuchen oder Rohren, mit einem Anschlussstück, das zumindest bereichsweise mit einer Leitung zusammenwirkt.

Kupplungen dieser Art kommen üblicherweise in der Automobilindustrie zum Einsatz, wenn Fluid führende Leitungen, beispielsweise Kraftstoffschläuche angeschlossen werden. Solche Kupplungen sind auch als Schnellkupplungen oder sogenannte Quick-Connectoren bekannt. Um einen festen Sitz der Leitung auf dem Anschlussstück, also dem Stutzen oder Nippel der Kupplung zu gewährleisten, wird die Fluid führende Leitung mit einer kleineren lichten Weite als der Außendurchmesser des Stutzens hergestellt und auf diesen aufgepresst. Die am weitesten verbreitete Verbindungsart bei dieser Technik ist die Einschlagverbindung, bei der zwischen dem Stutzen und der Leitung ein Formschluss hergestellt wird. Dabei wird das Anschlussstück mit einem entsprechenden Profil versehen, beispielsweise mit ringförmig gezackten Hinterschnitten. Dieses profilierte Anschlussstück wird in eine Leitung mit kleiner dimensioniertem Durchmesser eingepresst, so dass die Innenwand der Leitung plastisch und elastisch verformt wird, wodurch gleichzeitig abgedichtet und ein fester Sitz erreicht wird. Eine derartige Verbindung wird auch Tannenbaum-Verbindung genannt. Als Profilierung des Anschlussstückes werden auch abgerundete Wülste verwendet, die einen Kompromiss zwischen Halten und Dichten bei höheren Temperaturen darstellen.

Problematisch bei diesen bekannten Kupplungen ist die Neigung der bei der Leitungsherstellung verwendeten, im Extrusionsprozess axialorientierten Polymerwerkstoffe zur Relaxation bei erhöhten Temperaturen, wodurch die Haltekraft und Dichtheit der Verbindung zumindest teilweise verloren gehen.

Zur Vermeidung dieses Problems ist man dazu übergegangen, die Fluid führende Leitung und das Anschlussstück zu verschweißen oder zu verlöten. Durch die stoffschlüssige Verbindung ist keine dauerhafte Pressspannung zwischen Leitung und Anschlussstück erforderlich, um eine ausreichende Dichtheit und/oder Haltekraft zu erzeugen, so dass eine ausreichende Verbindung auch bei höheren Temperaturen erhalten bleibt.

Das Verschweißen hat nicht nur den Nachteil, dass spezielle Leitungen erforderlich sind, sondern auch dass die Materialauswahl stark eingeschränkt ist. Eine freie Materialauswahl ist auf Grund der aus der unterschiedlichen Konstitution und Polarität verschiedener Kunststoffe resultierenden fehlenden Mischbarkeit der Kunststoffschmelze nicht möglich. Es muss deshalb für jedes Leitungs- bzw. Stutzenmaterial das geeignete Gegenstück bereitgestellt werden. Beispielsweise können Kunststoffrohre mit Metallstutzen nicht verschweißt werden.

Das Verschweißen kann speziell durch Laserschweißen erfolgen. Dazu werden spezielle Leitungen benötigt, die im Verbindungsbereich für das Laserlicht durchlässig sind. Dadurch kann bei aufgesteckter Leitung der Laserstrahl auf die Oberfläche des Stutzens fokussiert und ausreichend Wärmeenergie in dessen Oberfläche eingetragen werden, um ein für das Verschweißen ausreichendes Erwärmen zu bewirken.

Die durch Laserschweißen hergestellten Verbindungen sind ferner auf Grund des hohen Investitionsaufwandes sehr kostspielig.

Der Erfindung liegt deshalb die Aufgabe zugrunde, eine Kupplung zum Verbinden von Leitungen anzugeben, die einfach und kostengünstig herstellbar ist bei gleichzeitig guter Dichtheit und/oder Halteeigenschaften. Ferner soll ein Verfahren zum Verbinden von Leitungen angegeben werden, das mit Hilfe der erfindungsgemäßen Kupplung durchführbar ist.

Hinsichtlich der Kupplung wird die Aufgabe durch den Gegenstand des Anspruchs 1 gelöst. Hinsichtlich des Verfahrens wird die vorgenannte Aufgabe durch den Gegenstand des Anspruchs 20 gelöst.

Der Vorteil der Erfindung besteht darin, dass durch den im Anschlussstück vorgesehenen Kleberaum vermieden wird, dass beim Aufstecken der Leitung auf das Anschlussstück das Klebemittel durch die Stirnfläche der Leitung vom Anschlussstück geschabt wird. Durch den Kleberaum wird erreicht, dass eine relativ große Menge Klebemittel an einer vorbestimmten Stelle vorhanden ist, die zumindest im Wesentlichen von der Stirnfläche der Leitung beim Aufschieben der Leitung auf das Anschlussstück nicht erreicht werden kann. Deshalb ist ausreichend Klebemittel an bestimmten vordefinierten Stellen des Anschlussstückes vorgesehen, die eine sichere Verbindung der Leitungen mit dem Anschlussstück der Kupplung gewährleisten.

Außerdem bietet das Klebemittel nach dem Aushärten nicht nur eine haftende Verbindung zwischen der Leitung und dem Anschlussstück, sondern aufgrund des dreidimensionalen Kleberaumes, der durch das ausgehärtete Klebemittel ausgefüllt ist, auch eine gute mechanische Verbindung, die ein Verrutschen der Leitung verhindert.

Die erfindungsgemäße Kupplung bietet also auf überraschend einfache Weise eine sehr kostengünstige Lösung, die im Vergleich mit bekannten Kupplungen, die nach dem Prinzip der Einschlagverbindung konstruiert sind, eine Steigerung der Einsatztemperaturen und Einsatzdrücke erlaubt, ohne dass die Dichtheit oder Haltekraft der Kupplung verloren gehen. Die Nachteile aus der Relaxation von Polymeren bei höheren Temperaturen werden durch den Einsatz des Klebemittels unterbunden.

Die erfindungsgemäße Kupplung erlaubt femer eine nahezu beliebige Kombination von Materialpaarungen zwischen Kupplung und Leitung, die im Wesentlichen nur die Haftfähigkeit des verwendeten Klebemittels berücksichtigen muss. Außerdem unterliegt die erfindungsgemäße Kupplung keinen Einschränkungen hinsichtlich Materialkompatibilität oder Lasertransparenz. Durch die großen Kontaktflächen verfügt die Kupplung über eine hohe mechanische Belastbarkeit.

In einer bevorzugten Ausführungsform umfasst der Kleberaum mindestens eine Ausnehmung in einer Anschlussfläche des Anschlussstückes. Diese eine oder gegebenenfalls mehrere Ausnehmungen können auf einfache Weise mit Klebemittel gefüllt werden und stellen somit einen dreidimensionalen Aufnahmeraum für das Klebemittel dar, der ein geeignetes Reservoir für das Klebemittel bietet, nachdem die Leitung auf die Kupplung aufgesteckt ist. Bei dieser Ausgestaltung der Kupplung kommt die mechanische Verbindung zwischen der Leitung und der Kupplung nach dem Aushärten des Klebemittels besonders zum Tragen, da das ausgehärtete Klebemittel einerseits die Ausnehmung bzw. Ausnehmungen in der Anschlussfläche des Anschlussstückes dichtend ausfüllt und andererseits haftend mit der Leitung verbunden ist.

Es hat sich als zweckmäßig herausgestellt, wenn die Ausnehmung als Kerbe ausgebildet ist, was eine besonders einfache Realisierung des Kleberaumes darstellt.

Die Ausnehmung kann flächig, vorzugsweise mit einem kreisförmigen oder ovalen Umfang, ausgebildet sein. Dies bietet den Vorteil einer vergrößerten Haftfläche, was wiederum der Festigkeit der Verbindung zugute kommt.

Die Ausnehmung kann auch als Nut mit vorzugsweise U- oder V-förmigem oder rechteckigem Querschnitt ausgebildet sein. Dadurch wird erreicht, dass sich der Kleberaum über einen längeren Bereich des Anschlussstückes erstreckt, wodurch eine Leckage verhindernde Barriere zwischen Leitung und Anschlussstück aufgebaut wird.

Vorteilhafterweise ist die Nut wenigstens teilweise in Umfangsrichtung und/oder in Längsrichtung des Anschlussstückes vorgesehen.

Die Anordnung der Nut in Umfangsrichtung ist besonders vorteilhaft, wenn ein Medium unter höherem Druck gefördert werden soll, da durch diese Anordnung der Nut die Dichtheit der Kupplung verbessert wird.

Bei bestimmten Anwendungen der Kupplung kommt es darauf an, dass die auf das Anschlussstück der Kupplung aufgesteckte Leitung gegen Verdrehen, also gegen Verrutschen in Umfangsrichtung gesichert ist. Für solche Anwendungen bietet es sich an, die Nut in Längsrichtung bzw. in axialer Richtung des Anschlussstückes vorzusehen. Das in der Nut ausgehärtete Klebemittel wirkt dann nach Art einer Passfeder, wodurch die mechanische Festigkeit der Verbindung erhöht wird. Bei dieser Ausführung liegt der Schwerpunkt auf einer guten Haltefunktion der Kupplung.

Durch eine Nut, die sich sowohl in Umfangs- als auch in Längsrichtung des Anschlussstückes erstreckt, können sowohl die Dichtheit als auch die Drehfestigkeit der Verbindung verbessert werden.

In einer weiteren bevorzugten Ausgestaltung der erfindungsgemäßen Kupplung umfasst das Anschlussstück wenigstens zwei voneinander beabstandete Erhebungen, die das Anschlussstück in Umfangsrichtung zumindest teilweise umgeben, wobei der Kleberaum zwischen diesen Erhebungen ausgebildet ist. Der Vorteil dieser Ausgestaltung liegt darin, dass die Haftverbindung mit einer formschlüssigen Verbindung kombiniert wird. Durch die im Wirkbereich des Anschlussstückes vorgesehenen Erhebungen wird eine Profilierung des Anschlussstückes erreicht, die eine formschlüssige Verbindung mit einer auf das Anschlussstück aufgeschobenen Leitung ermöglicht. Gleichzeitig dient der zwischen den Erhebungen ausgebildete Zwischenraum als mit Klebemittel gefüllter Kleberaum. Die Oberfläche des in diesem Kleberaum befindlichen Klebemittels kommt mit der Innenseite der auf das Anschlussstück aufgesteckten Leitung in Berührung, so dass zusätzlich zu der durch die Erhebungen bewirkten formschlüssigen Verbindung eine Haftverbindung zwischen dem Anschlussstück und der Leitung zustande kommt. Diese Kupplung vereint deshalb die Vorteile einer mechanischen formschlüssigen Verbindung mit den Vorteilen einer Klebeverbindung.

Es ist zweckmäßig, wenn die Erhebungen zackenförmig ausgebildet sind. Diese zackenförmigen Erhebungen graben sich in die Innenseite der Leitung ein und stellen dadurch eine besonders gute formschlüssige Verbindung her. Wenn die in Verbindungsrichtung hinter der Zackenflanke steiler geneigt ist als die vordere Zackenflanke, wird das Aufschieben der Leitung erleichtert, wobei gleichzeitig ein besonders großer Widerstand gegen das Abziehen der Leitung vom Anschlussstück durch die steiler geneigte, hintere Flanke sichergestellt wird. In einer weiteren Ausführungsform können die Erhebungen wellenförmig ausgebildet sein.

In einer besonders bevorzugten Ausgestaltung ist der Kleberaum zur Aufnahme eines Endabschnittes der Leitung ausgebildet, wobei der Kleberaum in einem in Verbindungsrichtung hinteren Bereich des Anschlussstückes vorgesehen und entgegen der Verbindungsrichtung geöffnet ist. Bei dieser Ausgestaltung wird das kupplungsseitige Leitungsende in den als Aufnahmeraum ausgestalteten Kleberaum eingeschoben und dort mit dem in den Kleberaum eingefüllten Kleber verklebt. Da hierbei das gesamte Leitungsende im Klebemittel eingebettet wird und gleichzeitig beim Einschieben des Leitungsendes die Zwischenräume zwischen dem Leitungsende und der Innenwand des Kleberaumes gleichmäßig mit Klebemittel ausgefüllt werden, ist diese Ausgestaltung hinsichtlich der Dichtheit besonders vorteilhaft.

In bevorzugter Weise sind mehrere voneinander beabstandete Kleberäume vorgesehen, die jeweils die gleiche Form oder unterschiedliche Formen aufweisen. Durch die Kombination mehrerer Kleberäume, beispielsweise durch die Kombination des als Aufnahmeraum ausgebildeten Kleberaums im hinteren Bereich des Anschlussstückes mit den in der Anschlussfläche vorgesehenen Ausnehmungen lässt sich eine Verbindung zwischen der Leitung und dem Anschlussstück herstellen, die sich durch besonders gute Dichtheit und besonders gute Festigkeit auszeichnet.

Das Anschlussstück kann angepasst sein, um mit einer Innenfläche der Leitung zusammenzuwirken, wobei der Kleberaum in einer Außenfläche des Anschlussstückes vorgesehen ist. Alternativ kann das Anschlussstück angepasst sein, um mit einer Außenfläche der Leitung zusammenzuwirken, wobei der Kleberaum in einer Innenfläche des Anschlussstückes vorgesehen ist. Die Leitung wird also entweder auf das Anschlussstück aufgeschoben oder in das Anschlussstück eingeschoben.

Bei dem zum Einschieben einer Leitung angepassten Anschlussstück kann ein die Innenfläche des Anschlussstückes definierender Durchmesser größer als ein Leitungsaußendurchmesser sein, so dass zwischen der Innenfläche des Anschlussstückes und der Außenfläche der Leitung ein Spalt ausgebildet wird, der mit Klebemittel gefüllt werden kann.

Überdies kann das Anschlussstück einen Vorsprung aufweisen, der mit der Innenfläche einen für einen Endabschnitt der Leitung vorgesehenen Aufnahmespalt bildet, mit dessen Hilfe eine Positionierung der Leitung im Anschlussstück erreicht wird. Außerdem kann dieser Aufnahmespalt mit Klebemittel gefüllt werden.

Es hat sich als zweckmäßig erwiesen, wenn der Vorsprung eine Länge von 1 mm bis 50 mm aufweist.

In bevorzugter Weise ist eine Wand zwischen der Innenfläche und dem Vorsprung des Anschlussstückes vorgesehen, in der eine Ausnehmung zur Aufnahme von Klebemittel ausgebildet ist. Beim Einschieben des Leitungsendes läuft Klebemittel in diese Ausnehmung. Das in die Ausnehmung gelaufene und dort ausgehärtete Klebemittel verbessert die Dichtheit der Verbindung.

Weitere Ausgestaltungen der erfindungsgemäßen Kupplung sind in den übrigen Unteransprüchen angegeben.

Der Vorteil des erfindungsgemäßen Verfahrens liegt darin, dass durch das gleichzeitige Aushärten des Klebemittels als auch durch die thermische Formgebung des Leitungswerkstoffes zwei Verfahrensschritte durch eine einzige Wärmebehandlung durchgeführt werden, wodurch das Verfahren verkürzt und die Kosten gesenkt werden. Zudem lässt sich das Verfahren einfach automatisieren.

Nachfolgend wird die Erfindung beispielhaft unter Bezug auf die beigefügten schematischen Zeichnungen näher erläutert. In diesen zeigen:
- Fig. 1: einen Längsschnitt durch eine Kupplung nach einem Ausführungsbeispiel der Erfindung, auf die eine Leitung aufgesteckt ist;
- Fig. 2: einen Längsschnitt durch das Anschlussstück einer Kupplung nach einem weiteren Ausführungsbeispiel, wobei das Anschlussstück ein wellenförmiges Profil aufweist;
- Fig. 3: eine schematische, perspektivische Ansicht der Kupplung nach Fig. 2 und
- Fig. 4: einen Längsschnitt durch eine Kupplung nach einem anderen Ausführungsbeispiel, in die eine Leitung eingesteckt ist.

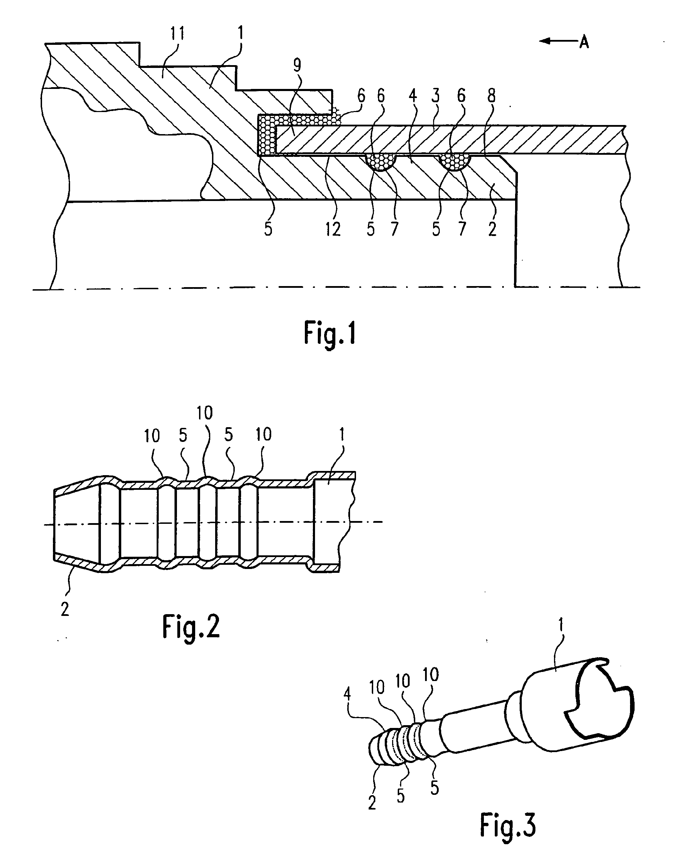

Fig. 1 zeigt in Längsschnitt eine Kupplung zum Verbinden von Leitungen, wobei auf die Darstellung des unteren Teils der rotationssymmetrischen Kupplung verzichtet wurde, da dieser dem gezeigten Teil entspricht.

Die Kupplung 1 umfasst ein Gehäuse 11, an dem Anschlussbauteile, wie beispielsweise die Zuführung zu einem Kraftstofftank angeschlossen werden können. Die gezeigte stufenförmige Gestalt des Gehäuses ist nur beispielhaft und kann durch andere Gehäuseformen ersetzt werden. Das Gehäuse 11 der Kupplung 1 ist einteilig mit einem Anschlussstück 2 verbunden, das sich entlang der Symmetrieachse der Kupplung erstreckt. Das Anschlussstück 2 weist einen Wirkbereich 4 auf, in dem das Anschlussstück mit einer aufgesteckten Leitung 3 zusammenwirkt. Die Leitung 3 wird auf das Anschlussstück 2 aufgeschoben oder -aufgepresst, um so eine mechanische Verbindung zwischen der Leitung 3 und dem Anschlussstück 2 herzustellen. Im vorliegenden Beispiel ist das Anschlussstück 2, insbesondere der Wirkbereich 4 des Anschlussstückes 2 rohrförmig ausgebildet. Andere Querschnittsformen des Wirkbereiches 4 des Anschlussstückes 2 sind je nach Anwendungsfall ebenfalls möglich.

Wie in Fig. 1 weiter zu erkennen, sind im Wirkbereich 4 des Anschlussstückes 2, insbesondere in der Kontaktfläche, also der Anschlussfläche 8, Kleberäume 5 vorgesehen. Diese Kleberäume 5 sind mit Klebemittel 6 gefüllt, das mit der auf das Anschlussstück 2 aufgesteckten Leitung 3 in haftenden Kontakt gelangen. Dadurch wird eine Haftverbindung zwischen der Leitung 3 und dem Wirkbereich 4 des Anschlussstückes 2 hergestellt.

Die Form, die Anordnung und die Anzahl der Kleberäume 5 sind nicht auf das in Fig. 1 gezeigte Beispiel mit zwei Kleberäumen 5 in der Anschlussfläche 8 beschränkt. Vielmehr ist jede andere Anzahl von Kleberäumen 5, beispielsweise 3 bis 20 Kleberäume, möglich, wobei die Bereichsangabe von 3 bis 20 jeden Zwischenwert, also beispielsweise auch 5, 10 oder 15 Kleberäume 5 umfasst.

Auch eine andere Anordnung der Kleberäume 5, beispielsweise eine andere Beabstandungen der Kleberäume 5 ist möglich. Die in der Anschlussfläche 8 vorgesehenen Kleberäume 5 können als jede beliebige Form einer Ausnehmung 7, beispielsweise als Kerbe, ausgebildet sein. Auch Ausnehmungen 7 mit einer größeren Kontaktfläche, beispielsweise kreisförmige oder ovale Ausnehmungen 7, sind ebenfalls denkbar. Eine weitere Ausgestaltungsmöglichkeit ist die Ausbildung der Ausnehmungen 7 als Nut, die sich entweder teilweise oder vollständig in Umfangsrichtung des Anschlussstückes 2 erstreckt. Auch die Anordnung einer oder mehrerer Nuten 7 in Längsrichtung des Anschlussstückes 2 oder eine Kombination von Umfangsnuten und Längsnuten ist möglich.

Die in Fig. 1 gezeigte Kupplung 1 weist eine weitere Form des Kleberaumes 5 auf, die nicht in der Anschlussfläche 8 ausgebildet ist, sondern am in Verbindungsrichtung hinteren Ende des Anschlussstückes 2 vorgesehen ist.

Die Verbindungsrichtung ist in Fig. 1 mit dem Pfeil A angegeben.

Wie in Fig. 1 zu erkennen, wird der als Aufnahmebereich für ein Leitungsende 9 ausgebildete Kleberaum 5 durch die Anschlussfläche 8 und zwei Gehäuseinnenflächen 12 begrenzt. Die Anschlussfläche 8 und die beiden Gehäuseinnenflächen 12 bilden eine im Querschnitt U-förmige Ausnehmung, die entgegen der Verbindungsrichtung A geöffnet ist. Dieser so begrenzte Kleberaum 5 ist mit einem Klebemittel 6 gefüllt, das durch Einschieben des Leitungsendes 9 zwischen die Spalte zwischen dem Leitungsende 9 und der U-förmigen Ausnehmung gleichmäßig gepresst wird. Dadurch wird eine besonders dichte Verbindung zwischen der Kupplung 1 und der Leitung 3 hergestellt.

In dem in Fig. 1 gezeigten Ausführungsbeispiel wird durch Verkleben des Leitungsendes 9 mit dem Aufnahmebereich des Anschlussstückes 2 und durch das Ausbilden definierter Klebestellen in der Anschlussfläche 8 des Anschlussstückes 2 eine Verbindung zwischen der Leitung 3 und der Kupplung 1 hergestellt, die sowohl eine ausreichende Dichtheit als auch eine ausreichende Festigkeit aufweist. Grundsätzlich ist es auch denkbar, die Ausnehmung nicht U-förmig, sondern V-förmig zu gestalten. Ebenso könnte man alternativ die äußere Gehäuseinnenfläche konisch gestalten. Es muss jedoch gewährleistet sein, dass die Ausnehmung taschenförmig ist.

Ein weiteres Beispiel einer erfindungsgemäßen Kupplung ist in Fig. 2 dargestellt. Dort ist zu sehen, dass im Wirkbereich 4 des Anschlussstückes 2 eine wellenförmige Profilierung vorgesehen ist, mit deren Hilfe eine Formschluss zwischen dem Anschlussstück 2 und einer auf das Anschlussstück aufsteckbaren Leitung hergestellt werden kann. Die Zwischenräume zwischen zwei voneinander beabstandeten Erhebungen 10 definieren Kleberäume 5, die mit einem Klebemittel 6 gefüllt sind. Aufgrund der wellenförmigen Profilierung des Anschlussstückes 2 wird zwischen der Leitung und dem Anschlussstück 2 sowohl eine formschlüssige Verbindung als auch eine Klebeverbindung hergestellt, die durch die mit Klebemittel 6 gefüllten Zwischenräume bzw. Kleberäume 5 erreicht wird. Eine derartige Kupplung 1 zeichnet sich deshalb durch eine besonders gute Dichtheit als auch durch eine besonders hohe Festigkeit der Verbindung aus, so dass diese Kupplung 1 auch stärkere Belastungen ausgesetzt werden kann. In Fig. 3 ist nochmals die in Fig. 2 gezeigte Kupplung 1 perspektivisch dargestellt.

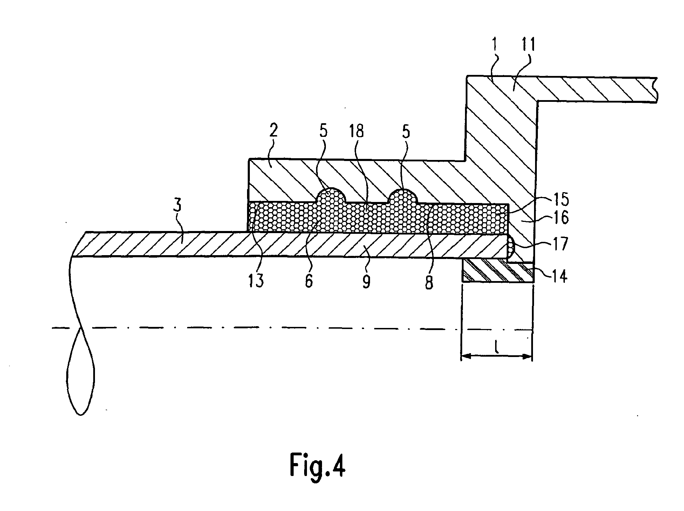

Fig. 4 zeigt ein anderes Beispiel einer erfindungsgemäßen Kupplung, bei welchem die Anschlussfläche 8 als eine Innenfläche 13 des Anschlussstückes 2 ausgebildet ist. Demgemäss wird der Endabschnitt 9 der Leitung 3 in das Anschlussstück 2 der Kupplung 1 eingesteckt, wobei der Außendurchmesser des Endabschnittes 9 kleiner ist als der Innendurchmesser des Anschlussstückes 2. Die Innenform des Anschlussstückes 2 richtet sich dabei nach der Gestaltung der Leitung 3 und ist im Allgemeinen zylindrisch. Andere Ausgestaltungen, beispielsweise eine ovale oder eine eckige Innenform des Anschlussstückes 2 sind denkbar. Dies gilt auch für die anderen vorgenannten Beispiele, bei denen die Anschlussfläche 8 als Außenfläche des Anschlussstückes 2 ausgebildet ist.

Wie weiter in Fig. 4 zu erkennen, sind in der Innenfläche 13 zwei Kleberäume 5 vorgesehen, die im vorliegenden Beispiel als umlaufende Nuten mit U-förmigem Querschnitt ausgebildet sind. Eine andere Anzahl von Nuten, beispielsweise nur eine Nut oder mehrere Nuten, beispielsweise drei oder vier Nuten, ist ebenfalls möglich. Die Nuten müssen nicht senkrecht zur Längsachse der Kupplung 1 umlaufen, sondern können auch auf andere Weise, beispielsweise schraubenförmig, ganz oder nur teilweise, umlaufend ausgebildet sein. Axial, also in Längsrichtung der Kupplung 1, sich erstreckende Nuten oder eine Kombination aus axialen und radialen Nuten sind ebenfalls möglich.

Bei dem in Fig. 4 gezeigten Ausführungsbeispiel ist der die Innenfläche 13 definierende Innendurchmesser des Anschlussstückes 2 größer als der Außendurchmesser der Leitung 3 im Bereich des Endabschnittes 9. Dadurch entsteht zwischen der Außenfläche der Leitung 3 und der Innenfläche 13 des Anschlussstückes 2 ein Spalt 18, der mit Klebemittel 6 gefüllt ist. Dadurch wird eine besonders gute Haftverbindung zwischen der Leitung 3 und der Kupplung 1 im Bereich des Anschlussstückes 2 hergestellt. Eine andere Wahl der beiden Durchmesser ist denkbar. Beispielsweise können die beiden Durchmesser so gewählt werden, dass zwischen der Leitung 3 und dem Anschlussstück 2 eine Presspassung gebildet wird, wobei die dadurch entstehende mechanische Verbindung durch die mittels der in den Kleberäumen 5 vorgesehenen Klebemittel 6 erzeugte Haftverbindung unterstützt wird.

Zur Positionierung des Endabschnittes 9 der Leitung 3 im Bereich des Anschlussstückes 2 der Kupplung 1 ist ein Vorsprung 14 vorgesehen, der im vorliegenden Beispiel konzentrisch zur Innenfläche 13 die sich senkrecht zur Längsrichtung der Kupplung 1 erstreckende Gehäusewand 16 stirnseitig abschließt. Dadurch wird zwischen dem Vorsprung 14 und der Innenfläche 13 ein Aufnahmespalt 15 gebildet, in den der Endabschnitt 9 der Leitung 3 eingeschoben wird. In Fig. 4 ist gezeigt, dass dieser Aufnahmespalt 15 so breit ist, dass nicht nur der Endabschnitt 9 darin aufgenommen werden kann, sondern auch eine entsprechende Menge an Klebemittel 6. Es ist nicht erforderlich, dass der Vorsprung 14 als zur Innenfläche 13 konzentrischer Zylinder ausgebildet ist. Andere Formen des Vorsprungs 14, beispielsweise mehrere in den Innenraum des Anschlussstückes 2 ragende Stege, sind ebenfalls möglich, sofern der in das Anschlussstück 2 eingeführte Endabschnitt 9 der Leitung 3 dadurch positioniert werden kann. Der Vorsprung 14 kann überdies einteilig mit dem im Gehäuse 11 der Kupplung 1 ausgebildet sein. Auch eine zweiteilige Form ist möglich, bei der der Vorsprung 14 als separates Bauteil mit der Wand 16 des Gehäuses 11 verbunden ist.

Die Länge L des Vorsprungs 14 kann zwischen 1 mm und 50 mm betragen, wobei auch noch kürzere oder noch längere Vorsprünge möglich sind. Es versteht sich von selbst, dass durch diese Bereichsangabe sämtliche Zwischenwerte, beispielsweise 15, 20, 30 oder 35 mm, mitoffenbart sind.

Ferner ist in Fig. 4 zu sehen, dass in der zwischen der Innenfläche 13 und dem Vorsprung 14 vorgesehenen Wand 16 des Gehäuses 11 eine Ausnehmung 17 eingebracht ist. Diese Ausnehmung 17 grenzt an den Vorsprung 14 an, so dass eine Stirnfläche des Endabschnittes 9 der Leitung 3 im eingeschobenen Zustand die Ausnehmung 17 abschließt. In Abhängigkeit von der Wandstärke der Leitung 3 ist auch eine vom Vorsprung 14 weiter entfernte Anordnung der Ausnehmung 17 möglich. Beim Einschieben des Endabschnittes 9 sammelt sich Klebemittel vor der Stirnfläche, das durch das Einschieben in die Ausnehmung 17 gepresst wird. Dadurch wird die Ausnehmung 17 mit Klebemittel 6 gefüllt, so dass eine Haftverbindung zwischen der Stirnfläche des Endabschnittes 9 und der Wand 16 des Gehäuses 11 im ausgehärteten Zustand des Klebemittels 6 gebildet wird. Dies trägt zu einer weiteren Verbesserung der Dichtheit der Verbindung zwischen der Leitung 3 und der Kupplung 1 bei. Die in Fig. 4 im Querschnitt gezeigte Ausnehmung 17 läuft konzentrisch zur Innenfläche 13 in der Wandung 16 um die Längsachse der Kupplung 1.

Zur Herstellung der Verbindung zwischen der Kupplung 1 und der Leitung 3 wird beispielsweise durch thermische Umformung ein ein- oder mehrschichtiges Rohr bzw. einoder mehrschichtiger Schlauch aus Kunststoff extrudiert. Das Klebemittel wird auf die aus Metall oder ebenfalls aus Kunststoff hergestellte Kupplung aufgetragen, wodurch die Kleberäume 5 mit Klebemittel gefüllt werden. Die Kupplung wird dann auf das Rohr aufgesetzt, wobei das Rohr mit der Kupplung in eine Form eingelegt wird, in der die gewünschte Formgebung stattfindet. Das Rohr wird sodann mit der Kupplung z.B. in eine Behandlungskammer übergeführt, in der eine Wärmebehandlung durchgeführt wird. Durch die Wärmebehandlung härtet das Klebemittel durch Vernetzung und/oder Polymerisation aus, wodurch eine feste Verbindung zwischen dem Rohr und der Kupplung hergestellt wird. Gleichzeitig wird durch die Wärmebehandlung eine Formgebung entsprechend der Einlegeform erreicht.

Auf diese Weise wird ein vollständiger Arbeitsgang mit mehreren Arbeitsschritten eingespart, was dieses Verfahren besonders kostengünstig macht.

In einem weiteren Beispiel können ein aus Polyamid hergestelltes Rohr mit einer aus Polyamid hergestellten Kupplung unter Verwendung einer Polyamidpaste oder Polyamidlösung als Klebemittel verbunden werden. Anstelle des Polyamid können auch andere Werkstoffe, beispielsweise Polyethylen, verwendet werden. Bei der Aktivierung auf chemisch-physikalischen Wege wird in der Paste bzw. der Lösung die Polymerisation bzw. Vernetzung gestartet, wodurch sich eine feste Verbindung zwischen dem Rohr und der Kupplung bildet, beispielsweise durch die Bildung von makromolekularen Strukturen aus den monomeren Strukturen.

Eine weitere Verbindungsmöglichkeit erfolgt mit Hilfe von Heißklebern, PUR, Epoxidharz oder eines Kunststoffkomposits. Die Heißkleber werden reversibel aufgeschmolzen und aufgetragen, wobei die Aushärtung durch Abkühlung stattfindet. Die Kunststoffkomposite bestehen aus einer Kunststoffmatrix und Füllstoffen auf organischer oder anorganischer Basis.

Als Materialien für die Kupplung kommen alle möglichen Metalle, einschließlich deren Legierungen, in Frage, wobei die Metalle entsprechend ihrer Anwendung vergütet oder allgemein wärmebehandelt sein können. Ferner können Kunststoffe, wie z.B. Thermoplasten, Duroplasten, Duromere, Elastomere, thermoplastische Elastomere, Keramiken, gesinterte Werkstoffe und Glas, verwendet werden. Ein Verbund aus diesen Materialien ist ebenfalls denkbar. Die Oberflächen, insbesondere des Anschlussstückes 2, können unbehandelt, behandelt oder beschichtet sein.

Für das Material der Leitung kommen ebenfalls die im Zusammenhang mit der Kupplung genannten Materialien in Frage. Dabei sind alle möglichen Werkstoffkombinationen zwischen der Kupplung und der Leitung denkbar.

Ferner können ein- oder mehrschichtige Leitungen verwendet werden. Die Ausführung der Leitungen ist ebenfalls nicht beschränkt. So können die Leitungen als Glattrohr oder als Wellrohr, das auch nur abschnittsweise oder parallel oder spiralförmig gewellt sein kann, ausgeführt sein. Eine Plasma-Oberflächenbehandlung der Kunststoffe, eine Oberflächenmetallisierung oder die Behandlung mit einem Primer sind ebenfalls denkbar.

Als Klebemittel sind einkomponentige und mehrkomponentige Klebstoffe, duromere Klebstoffe (z.B. Epoxidharz, PUR-Polyurethan-, Polyester-Klebstoffe), des Weiteren lösungsmittelfreie oder lösungsmittelhaltige Klebstoffe, Heißklebstoffe und reine oder gefüllte Klebstoffe einsetzbar. Als Füll- und Wirkstoffe bzw. Funktionsstoffe im Klebemittel sind Kunststoffpartikel, anorganische und organische Bestandteile sowie Kohlenstoff, Kreide oder Ruß möglich. Bei der Verwendung von Kohlenstoff ist natürlich die elektrische Leitfähigkeit dieses Materials zu berücksichtigen.

Aushärtbare Klebstoffe sollten bei Temperaturen zwischen -50 °C und +350 °C aushärten.

Die Klebemittel können durch Wärmeeinfluss, aber auch durch andere Formen der Energie, beispielsweise durch elektromagnetische Strahlung, insbesondere im UV-, Infrarot- oder Mikrowellenbereich aktiviert werden. Die Aktivierung der Klebemittel kann durch chemisch/physikalische Reaktionen, beispielsweise durch einen Aktivator, der als Gas in der Behandlungskammer zugeführt wird, erfolgen. Die Aktivierung der Klebemittel durch Feuchtigkeit ist ebenfalls denkbar, was den Vorteil mit sich bringt, dass die Reaktion in normaler Atmosphäre erfolgen kann.

Die Kupplung eignet sich besonders für den Einsatz in der Automobilindustrie, beispielsweise zur Verbindung von Fluidleitungen, wie Kraftstoffschläuchen, aber auch für den Einsatz auf anderen technischen Gebieten, in denen es auf die Herstellung dichter und fester Verbindungen zwischen Leitungen ankommt, durch die flüssige Medien gefördert werden.

## Patentansprüche

1. Kupplung zum Verbinden von Leitungen, insbesondere von Schläuchen oder Rohren, mit einem Anschlussstück (2), das zumindest bereichsweise mit einer Leitung (3) zusammenwirkt,
**dadurch gekennzeichnet, dass**
das Anschlussstück (2) wenigstens einen Kleberaum (5) aufweist, der mit einem Klebemittel (6) gefüllt ist.

2. Kupplung nach Anspruch 1, **dadurch gekennzeichnet, dass** der Kleberaum (5) mindestens eine Ausnehmung (7) in einer Anschlussfläche (8) des Anschlussstückes (2) umfasst.

3. Kupplung nach Anspruch 2, **dadurch gekennzeichnet, dass** die Ausnehmung (7) als Kerbe ausgebildet ist.

4. Kupplung nach Anspruch 2, **dadurch gekennzeichnet, dass** die Ausnehmung (7) flächig, vorzugsweise mit einem kreisförmigen oder ovalen Umfang, ausgebildet ist.

5. Kupplung nach Anspruch 2, **dadurch gekennzeichnet, dass** die Ausnehmung (7) als Nut ausgebildet ist.

6. Kupplung nach Anspruch 5, **dadurch gekennzeichnet, dass** die Nut wenigstens teilweise in Umfangsrichtung und/oder in Längsrichtung des Anschlussstückes (2) vorgesehen ist.

7. Kupplung nach Anspruch 1, **dadurch gekennzeichnet, dass** das Anschlussstück (2) wenigstens zwei voneinander beabstandete Erhebungen (10) umfasst, die das Anschlussstück (2) in Umfangsrichtung zumindest teilweise umgeben, wobei der Kleberaum (5) zwischen den Erhebungen (10) ausgebildet ist.

8. Kupplung nach Anspruch 7, **dadurch gekennzeichnet, dass** die Erhebungen (10) zackenförmig ausgebildet sind, wobei vorzugsweise die in Verbindungsrichtung hintere Zackenflanke steiler geneigt ist als die vordere Zackenflanke.

9. Kupplung nach Anspruch 7, **dadurch gekennzeichnet, dass** die Erhebungen (10) wellenförmig ausgebildet sind.

10. Kupplung nach Anspruch 1, **dadurch gekennzeichnet, dass** der Kleberaum (5) zur Aufnahme eines Endabschnittes (9) der Leitung (3) ausgebildet ist, wobei der Kleberaum (5) in einem in Verbindungsrichtung hinteren Bereich des Anschlussstückes (2) vorgesehen und entgegen der Verbindungsrichtung geöffnet ist.

11. Kupplung nach wenigstens einem der Ansprüche 1 bis 10, **dadurch gekennzeichnet, dass** mehrere voneinander beabstandete Kleberäume (5) vorgesehen sind, die jeweils die gleiche Form oder unterschiedliche Formen aufweisen.

12. Kupplung nach wenigstens einem der Ansprüche 1 bis 11, **dadurch gekennzeichnet, dass** die Kupplung aus Metall, Kunststoff, Keramik, einem Sinterwerkstoff, Glas oder einem Verbund zweier oder mehrerer dieser Materialien hergestellt ist.

13. Kupplung nach wenigstens einem der Ansprüche 1 bis 12, **dadurch gekennzeichnet, dass** das Klebemittel ein- oder mehrkomponentige Klebstoffe, duromere Klebstoffe, lösungsmittelfreie oder lösungsmittelhaltige Klebstoffe, Heißklebstoffe und reine oder gefüllte Klebestoffe umfasst.

14. Kupplung nach wenigstens einem der Ansprüche 1 bis 13, **dadurch gekennzeichnet, dass** das Anschlussstück (2) angepasst ist, um mit einer Innenfläche der Leitung (3) zusammenzuwirken, wobei der Kleberaum (5) in einer Außenfläche (12) des Anschlussstückes (2) vorgesehen ist.

15. Kupplung nach wenigstens einem der Ansprüche 1 bis 13, **dadurch gekennzeichnet, dass** das Anschlussstück (2) angepasst ist, um mit einer Außenfläche der Leitung (3) zusammenzuwirken, wobei der Kleberaum (5) in einer Innenfläche (13) des Anschlussstückes (2) vorgesehen ist.

16. Kupplung nach Anspruch 15, **dadurch gekennzeichnet, dass** ein die Innenfläche (13) definierender Durchmesser größer als ein Leitungsaußendurchmesser ist.

17. Kupplung nach Anspruch 15 oder 16, **dadurch gekennzeichnet, dass** das Anschlussstück (2) einen Vorsprung (14) aufweist, der mit der Innenfläche (13) einen für einen Endabschnitt (9) der Leitung (3) vorgesehenen Aufnahmespalt (15) bildet.

18. Kupplung nach Anspruch 17, **dadurch gekennzeichnet, dass** der Vorsprung (14) eine Länge von 1 mm bis 50 mm aufweist.

19. Kupplung nach Anspruch 17 oder 18, **dadurch gekennzeichnet, dass** eine Wand (16) zwischen der Innenfläche (13) und dem Vorsprung (14) des Anschlussstückes (2) vorgesehen ist, in der eine Ausnehmung (17) zur Aufnahme von Klebemittel (6) ausgebildet ist.

20. Verfahren zum Verbinden von Leitungen, insbesondere von Schläuchen oder Rohren, mittels einer Kupplung nach wenigstens einem der Ansprüche 1 bis 13, **dadurch gekennzeichnet, dass**
- das Anschlussstück (2) der Kupplung auf eine Leitung aufgesetzt und
- eine Wärmebehandlung durchgeführt wird, bei der sowohl das Klebemittel aushärtet als auch die Leitung thermisch umgeformt wird.
